# EUROPÄISCHE PATENTSCHRIFT

(11) **EP 1 960 842 B1**
(45) Veröffentlichungstag und Bekanntmachung des Hinweises auf die Patenterteilung: **21.03.2012**
(21) Anmeldenummer: 06722827.0
(22) Anmeldetag: 25.04.2006
(51) Int. Cl.: G03H 1/22, G02B 27/22, H04N 13/00, G02B 5/32

(54) **STEUERBARE BELEUCHTUNGSEINRICHTUNG**
CONTROLLABLE ILLUMINATION DEVICE
DISPOSITIF D'ECLAIRAGE REGLABLE

(30) Priorität: 29.04.2005 DE 102005021155
(43) Veröffentlichungstag der Anmeldung: 27.08.2008
(73) Patentinhaber: SeeReal Technologies GmbH, 01099 Dresden (DE)
(72) Erfinder: HÄUSSLER, Ralf, 01309 Dresden (DE); SCHWERDTNER, Armin, 01259 Dresden (DE)
(74) Vertreter: Bradl, Joachim
(86) Internationale Anmeldenummer: PCT/DE2006/000709
(87) Internationale Veröffentlichungsnummer: WO 2006/116965

(56) Entgegenhaltungen:
- WO-A-03/053072
- US-A- 5 539 543
- US-A1- 2004 233 275

## Beschreibung

Die Erfindung betrifft eine steuerbare Beleuchtungseinrichtung, bestehend aus einer Beleuchtungsmatrix mit einem Backlight aus primären Lichtquellen sowie einem steuerbaren Lichtmodulator, dessen Licht in Bündeln von einer Abbildungsmatrix auf mindestens einen Betrachter durch eine Wiedergabematrix gerichtet ist, die es dabei ausleuchtet. Die Wiedergabematrix kann ein stereoskopisches oder holografisches Display sein, auf dem eine monoskopische oder stereoskopische Information dargestellt wird. Die primären Lichtquellen können wahlweise punkt-, linien- oder flächenförmig mit mindestens einem leuchtenden Element pro Lichtquelle ausgebildet sein.

Displays zur 2D-Darstellung enthalten üblicherweise ein so genanntes Backlight zur Beleuchtung der Wiedergabematrix. Damit man eine gleichmäßige Bildhelligkeit erhält, muss das Backlight eine möglichst homogen leuchtende Fläche in der Größe der Wiedergabematrix aufweisen.

Dagegen muss bei autostereoskopischen 3D-Displays (ASD) zur stereoskopischen Darstellung zwar auch die Wiedergabematrix, nicht aber der Betrachterraum gleichmäßig beleuchtet werden. Hier werden unterschiedliche perspektivische Ansichten des dargestellten Objekts getrennt in benachbarte Bereiche des Betrachterraums gelenkt, damit das linke bzw. rechte Auge des Betrachters unterschiedliche Ansichten des Objektes sieht, die der Betrachter dann als dreidimensionale Darstellung wahrnimmt.

Um diese gerichtete Abstrahlung zu erreichen, werden z.B. zur Beleuchtung einer Abbildungsmatrix mit periodisch angeordneten Zylinderlinsen häufig Linien-Lichtquellen verwendet.

Für einen oder mehrere Betrachter ist es zum Aufrechterhalten des Stereoeindrucks vorteilhaft, wenn ihm/ihnen bei einer Ortsveränderung die jeweiligen Ansichten nachgeführt werden. Dazu können beispielsweise die Lichtquellen in ihrem Abstand und ihrer Position veränderbar ausgeführt sein. Eine veränderliche Anordnung von Linien-Lichtquellen zum Nachführen eines Sichtbarkeitsbereiches wird auch benötigt, wenn ein holografisches Display anstelle des autostereoskopischen Displays als Wiedergabematrix benutzt wird. Insbesondere dann, wenn es sich beispielsweise um ein holografisches Display mit nachführbaren Betrachterfenstern entsprechend DE 103 53 439 der Anmelderin handelt.

In einer gerichteten Beleuchtungseinrichtung werden die üblicherweise eingesetzten großflächigen Backlights werden meist in Verbindung mit einem LCD-Panel als so genanntem Shutter zur Intensitätsregelung verwendet, wie er in der OS 103 39 076 A1 der Anmelderin beschrieben wird. Dieser Shutter besteht aus einer regelmäßigen Anordnung von steuerbaren transparenten und absorbierenden Bereichen, die das vom großflächigen Backlight ausgehende Licht nur an den gewünschten Stellen durchlassen. Zum Nachführen der perspektivischen Ansichten werden die transparenten Bereiche geeignet verschoben. Dazu werden auf dem Shutter die transparenten Zeilen bzw. Spalten entsprechend geschaltet. Dabei wird das meiste Licht an den weniger oder nicht transparenten Gebieten des Shutters absorbiert bzw. ausgeblendet. Um trotz des Ausblendens eine ausreichende Bildhelligkeit zu erreichen, ist der Einsatz leistungsstarker Backlights erforderlich. Diese sind teuer in der Anschaffung und führen zu einem hohen Stromverbrauch sowie einer starken Erwärmung des Displays durch Licht-Absorption. Außerdem ruft das Streulicht des Shutters einen reduzierten Stereokontrast hervor.

Eine weitere Anordnung zur Fokussierung des Lichts auf Betrachteraugen im Raum wird z.B. in WO 03/053072 offenbart, indem ein dreidimensionales Backlight benutzt wird. Das Backlight enthält mehrere Ebenen mit matrixförmig angeordneten Lichtquellen, in denen mindestens ein Element pro Lichtquelle zum Beleuchten eines Betrachterauges aktiviert wird. Die Elemente der Lichtquellen können in verschiedenen Ebenen alternierend aktiviert werden, um in verschiedenen Ebenen erfasste Betrachteraugen zu beleuchten. Das Licht wird durch ein großformatiges optisches Abbildungsmittel auf die Betrachteraugen abgebildet und durchläuft auf seinem Weg eine Wiedergabematrix, die im zeitsequentiellen Modus das jeweilige Bild dem entsprechenden Betrachterauge anbietet. Nachteilig an dieser Anordnung ist die große Tiefe des autostereoskopischen Displays, die durch das dreidimensionale Backlight und das großformatige Abbildungsmittel entsteht. Außerdem ist das Gerät sehr schwer und das dreidimensionale Backlight schwierig herzustellen.

Weiterhin sind in monoskopischen und autostereoskopischen Displays Beleuchtungssysteme bekannt, die zum Erzeugen der gerichteten Beleuchtung Hologramme anstelle von steuerbaren Shuttermasken verwenden. In WO 02/12930 A1 wird ein Beleuchtungssystem beschrieben, das aus einem kollimierten Backlight und zwei hintereinander angeordneten Hologrammen besteht.

Dieses räumlich verschachtelte Doppelhologramm erzeugt einen rechten bzw. linken Sichtbarkeitsbereich für einen Betrachter. Der Pitch der verschachtelten Hologramme ist durch den Pitch des Informationsdisplays vorgegeben und durch den Aufzeichnungsprozess fixiert. Damit ist das Beleuchtungssystem aber nicht steuerbar im Sinne einer Nachführung der Sichtbarkeitsbereiche bei z.B. seitlicher Bewegung des Betrachters. Es wird hier keine zur Nachführung notwendige Umcodierung der Hologramme vorgenommen.

Das Beleuchtungssystem in WO 00/43841 besteht aus einer Lichtquelle und mehreren aufeinanderfolgenden Hologrammen. Diese sind in dem Sinn steuerbar, dass sie von einem aktiven Zustand, bei dem das auftreffende Licht gebeugt wird, in einen passiven Zustand ohne Beugungswirkung umgeschaltet werden können. Die Erzeugung eines veränderbaren Musters der Lichtquellen durch Umkodierung der Hologramme ist nicht Gegenstand der Erfindung.

In einem weiteren Dokument GB 2 404 991 A wird ein steuerbares holografisches optisches Element (HOE) im Zusammenwirken mit einer reflektiven Beleuchtung verwendet. Der Strahlengang eines Informationsdisplays wird dadurch in zwei getrennte Sichtbarkeitsbereiche geteilt. Auf diese Weise wird zusammen mit dem nicht gerichteten Backlight zur transmissiven Beleuchtung des Informationsdisplays eine Umschaltung vom 2D- in den 3D-Modus erreicht.

Die Anordnungen in den genannten Dokumenten mit Hologrammen erlauben außerdem keine Beeinflussung des primären Beleuchtungssystems, sondern arbeiten mit dem gesamten vom Backlight kommenden Licht. Die genannten Nachteile des hohen Stromverbrauchs und der starken Erwärmung treten deshalb auch hier in Erscheinung.

Die Aufgabe der Erfindung besteht in der Schaffung einer steuerbaren Beleuchtungseinrichtung zum Erzeugen von strukturierten, nicht vollflächig strahlenden Lichtmitteln in einem 3D-Display, mit der eine homogene Ausleuchtung einer Wedergabematrix und ein guter Stereokontrast der 3D-Darstellung erreicht werden. Gleichzeitig sollen mit der steuerbaren Beleuchtungseinrichtung auch die Korrektur von Abbildungsfehlern der verwendeten Abbildungsmatrix und ein komfortabler Multi-User-Betrieb ermöglicht werden.

Die Aufgabe wird durch eine steuerbare Beleuchtungseinrichtung gelöst, die eine Matrix primärer Lichtquellen und einen steuerbaren Lichtmodulator enthält und das Licht durch eine Wiedergabematrix hindurch abwechselnd auf jeweils ein rechtes und linkes Betrachterauge in einer Betrachterebene richtet. Unter einem steuerbaren Lichtmodulator (SLM) wird in dieser Erfindung ein Lichtmodulator verstanden, der Licht in einer zweidimensionalen Matrix koordinatenabhängig in Phase und/oder Amplitude moduliert.

Mit der Matrix primärer Lichtquellen entsteht eine strukturierte Beleuchtungsmatrix erfindungsgemäß nach einem ersten Merkmal der Erfindung dadurch, dass auf dem steuerbaren Lichtmodulator (SLM) ein computergeneriertes Hologramm (CGH) kodiert ist, dessen Kodierung mit variablen Parametern zum Realisieren einer in Abhängigkeit von der Position der Betrachteraugen konfigurierbaren Beleuchtung erfolgt. Das CGH wird von der Matrix primärer Lichtquellen beleuchtet. Entsprechend einem zweiten Merkmal der Erfindung ist durch das CGH in mindestens einer dem SLM nachfolgenden Ebene eine Matrix sekundärer Lichtquellen mit einer sekundären Lichtverteilung zur Beleuchtung der Wiedergabematrix und zur Fokussierung in Lichtbündeln auf das jeweilige Betrachterauge rekonstruiert.

Dadurch wird erreicht, dass eine primäre Lichtverteilung der primären Lichtquellen in eine geforderte, von der Betrachterposition abhängige sekundäre Lichtverteilung einer Anordnung von sekundären Lichtquellen umgeformt wird. Die primären Lichtquellen sind wahlweise punkt-, linien- oder flächenförmig ausgeführt. Die rekonstruierten sekundären Lichtquellen bilden eine Matrix, die aus wahlweise punkt-, linien- oder flächenförmigen Lichtelementen mit einer sekundären Lichtverteilung besteht.

Sollen bei Bewegungsänderung eines Betrachters, oder um mehrere Betrachter mit Licht zu versorgen, die Sichtbarkeitsbereiche zu- oder abgeschaltet, verschoben oder nachgeführt werden, kann das vorteilhaft durch verschiedene Maßnahmen erreicht werden. Einerseits können bei einer bestimmten Kodierung des Hologramms die Matrix primärer Lichtquellen insgesamt in ihrer Anordnung oder Intensität geändert werden oder nur einzelne Lichtquellen der Matrix, andererseits kann eine Änderung des kodierten CGHs erfolgen und die primären Lichtquellen bleiben unverändert. Auch eine Kombination beider Maßnahmen ist möglich. Mit diesen Maßnahmen wird vorteilhaft erreicht, dass sekundäre Lichtquellen in verschiedenen Ebenen gleichzeitig rekonstruiert werden können und ein sogenanntes dreidimensionales Backlight bilden. Auf diese Weise kann mit Lichtbündeln mehreren Betrachtern gleichzeitig eine 3D-Darstellung angeboten werden oder einem Betrachter die gewünschte Information im 3D-Modus und einem anderen eine monoskopische Darstellung.

Die sekundäre Lichtverteilung ist durch die Anordnung, Anzahl und Intensität der sekundären Lichtquellen der Matrix veränderbar.

Zum Vermeiden von Abbildungsfehlern, wie etwa der Bildfeldkrümmung der Abbildungselemente der Abbildungsmatrix, ist es vorteilhaft, diese beim Kodieren des CGHs zu kompensieren.

Der für die Kodierung verwendete SLM ist ein diffraktives optisches Element (DOE) und kann transmissiv oder reflektiv als ein phasen-, amplituden- oder phasen- und amplitudenmodulierendes bzw. als phase-mostly oder amplitude-mostly CGH ausgebildet sein. Ihm können in beispielhaften Ausführungen optische Elemente zum Formen, Umlenken oder Ausblenden von Lichtbündeln vor- oder nachgeordnet sein. Diesem steuerbaren Lichtmodulator kann in einer anderen Ausführungsform ein weiterer transmissiver steuerbarer Lichtmodulator zum Ausblenden von Streulicht und Licht höherer Beugungsordnungen sowie zum Einschränken der Ausdehnung der sekundären Lichtquellen nachgeordnet sein.

Die Abbildungsmatrix des jeweils verwendeten Displays kann ein Lentikular mit parallel angeordneten Lentikeln, ein Linsenarray oder ein holografisches optisches Element (HOE) sein. Die Elemente der Abbildungsmatrix können auch verstellbar sein.

Bei Verwendung einer holografisch kodierten Wiedergabematrix zur Informationsdarstellung in einem holografischen Display ist auf eine hinreichende räumliche und zeitliche Kohärenz der primären und sekundären Lichtquellen zur Rekonstruktion des Hologramms zu achten.
Weitere vorteilhafte Ausführungen sind den Unteransprüchen zu entnehmen.

Durch die genannten Mittel in ihrer erfindungsgemäßen Anordnung wird erreicht, dass konfigurierbare steuerbare Lichtquellen als Beleuchtungsmittel in autostereoskopischen und holografischen Displays eine effiziente Nutzung des Lichtes realisieren. Die weitgehende Vermeidung absorbierender Elemente beim Schaffen sekundärer Lichtquellen gestattet einen minimalen Verlust an eingesetzter Lichtenergie. Dadurch ist es praktisch möglich, primäre Lichtquellen mit geringer Intensität als Backlight zu verwenden, was zu einer verminderten Leistungsaufnahme und Erwärmung führt. Aufgrund der im Vergleich zum Stand der Technik geringeren Lichtmenge entsteht weniger Streulicht und man erhält einen höheren Stereokontrast durch geringeres Übersprechen auf das jeweils andere Auge. Mit der Beleuchtungseinrichtung werden so vorteilhaft die Nachteile herkömmlicher Backlights vermieden und zusätzlich Korrekturmöglichkeiten für Abbildungsfehler der Abbildungsmatrix integriert. Besonders die Möglichkeit, die Positionen der sekundären Lichtquellen dreidimensional durch ihre Rekonstruktion in verschiedenen Ebenen kontinuierlich anzupassen, ohne dabei die primären Lichtquellen in ihrem Abstand zur Wiedergabematrix zu verändern, ist eine wesentliche technische und wirtschaftliche Verbesserung gegenüber einer dreidimensionalen Anordnung primärer Lichtquellen des Standes der Technik und besonders vorteilhaft bei Multi-User-Displays anwendbar.

Die erfindungsgemäße Beleuchtungseinrichtung wird nachfolgend näher beschrieben. Die Zeichnungen zeigen in Draufsicht mit
- Fig. 1: eine Beleuchtungseinrichtung mit primären Lichtquellen und einem Hologramm, das von einer aktivierten Lichtquelle beleuchtet wird und in einer Ebene sekundäre Lichtquellen rekonstruiert,
- Fig. 2: anhand einer primären Lichtquelle und der entsprechenden sekundären Lichtquelle , wie sich die Matrix sekundärer Lichtquellen durch Verschieben primärer Lichtquellen ändern lässt,
- Fig. 3: von sekundären Lichtquellen ausgehende Lichtbündel, die über ein Lentikular als Abbildungsmatrix eine Wiedergabematrix eines autostereoskopischen Displays und ein linkes Betrachterauge beleuchten,
- Fig. 4: eine schematische Darstellung des Aufbaus eines autostereoskopischen Multi-User-Displays mit der erfindungsgemäßen Beleuchtungseinrichtung und den Strahlenverlauf im Display für ein rechtes Auge eines Betrachters und
- Fig. 5: vom CGH rekonstruierte sekundäre Lichtquelle für zwei Betrachter in unterschiedlichen Betrachterebenen.

Anhand eines autostereoskopischen Displays mit einem Lentikular als Abbildungsmatrix wird nachfolgend die erfindungsgemäße steuerbare Beleuchtungseinrichtung näher beschrieben, wobei die Bildinformation in der Wiedergabematrix sequentiell dargestellt wird.

Ist das autostereoskopische Display ein Multi-User-Display und die Beleuchtungsmatrix enthält beispielsweise Linien-Lichtquellen zur Beleuchtung der Wiedergabematrix und zur Lichtbündelung auf Betrachteraugen, dann werden neben den Linien-Lichtquellen für das linke bzw. rechte Auge des ersten Betrachters weitere Linien-Lichtquellen für weitere Betrachteraugen benötigt. Mit der erfindungsgemäßen Lösung wird eine derartige Beleuchtung realisiert.

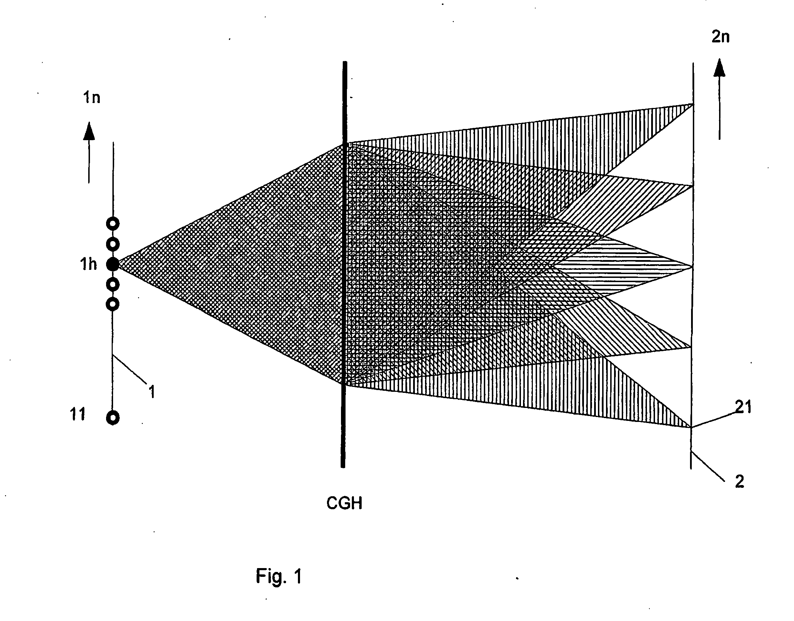

Fig. 1 zeigt schematisch einen Ausschnitt der erfindungsgemäßen steuerbaren Beleuchtungseinrichtung mit einem Teil der Matrix primärer Lichtquellen 1, einem Teil des SLM mit einem darin kodierten Teilhologramm (CGH) und einer Matrix sekundärer Lichtquellen 2. In der Matrix primärer Lichtquellen 1 mit Lichtquellen 11,..., 1n ist eine Lichtquelle 1h eingeschaltet, die das Teilhologramm beleuchtet. Es rekonstruiert eine Matrix sekundärer Lichtquellen 2 mit Lichtquellen 21,..., 2n, die im dargestellten Beispiel äquidistant angeordnet sind und sich alle in der gleichen Ebene befinden. Anstelle einer primären Lichtquelle können auch mehrere mit unterschiedlicher Intensität eingeschaltet werden. Die Teilhologramme können gleichzeitig auch von mehreren primären Lichtquellen beleuchtet werden.

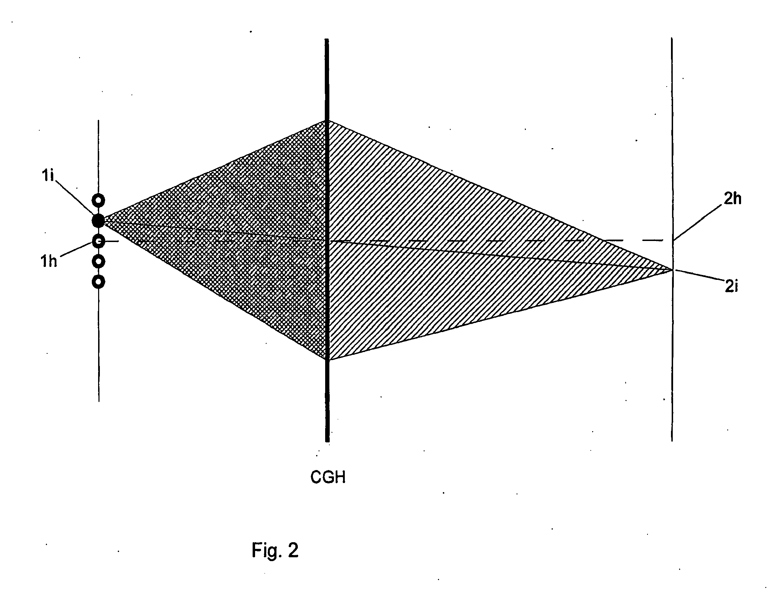

Fig. 2 zeigt anhand einer ausgewählten primären Lichtquelle 1 h für ein Teilhologramm, wie sich die sekundäre Lichtquelle 2h durch eine Verschiebung der primären Lichtquelle 1 h verschieben lässt, um beispielsweise einer seitlichen Bewegung eines Betrachters zu folgen. Der Übersichtlichkeit halber sind jeweils nur eine primäre und eine sekundäre Lichtquelle 1 h; 2h eingezeichnet und die durch die Verschiebung aktivierte primäre Lichtquelle 1i sowie die entsprechende rekonstruierte sekundäre Lichtquelle 2i.

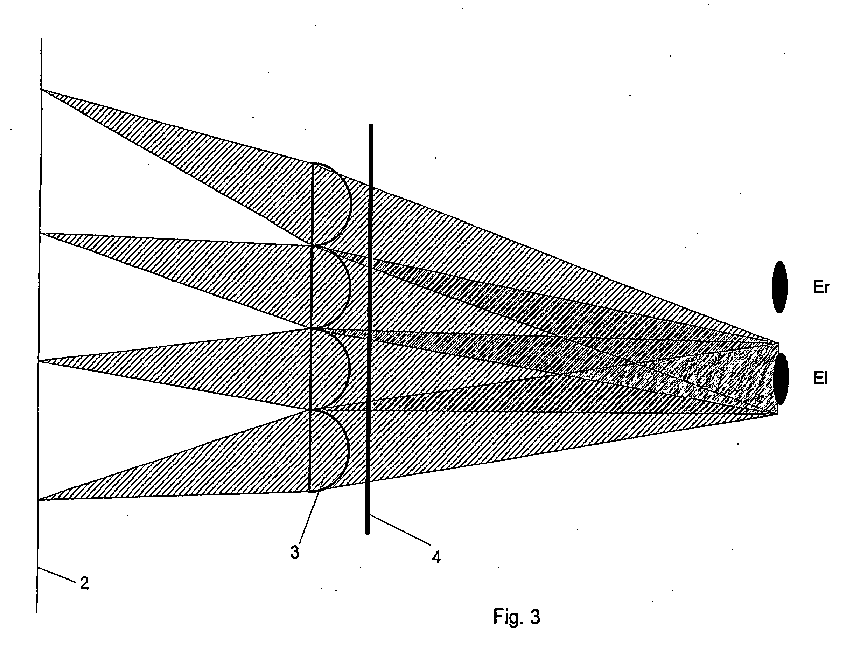

Fig. 3 zeigt Lichtbündel, die von der Matrix sekundärer Lichtquellen 2 ausgehen und auf ein Lentikular 3 als Abbildungsmatrix treffen, von dem sie eine nachfolgende Wiedergabematrix 4 eines autostereoskopischen Displays und ein linkes Betrachterauge EI beleuchten. Die Positionen und Abstände der rekonstruierten sekundären Lichtquellen 21,..., 2n (siehe Fig. 1) zu den Lentikeln des Lentikulars sind so gewählt, dass von diesen Lentikeln ausgehende Lichtbündel am linken Auge EI zusammentreffen. Durch Erzeugen der sekundären Lichtquellen 21,..., 2n an anderen Stellen lässt sich sequentiell das andere Auge beleuchten. Mit dem Zuschalten von weiteren Lichtquellen kann das andere Auge El auch gleichzeitig bedient werden.

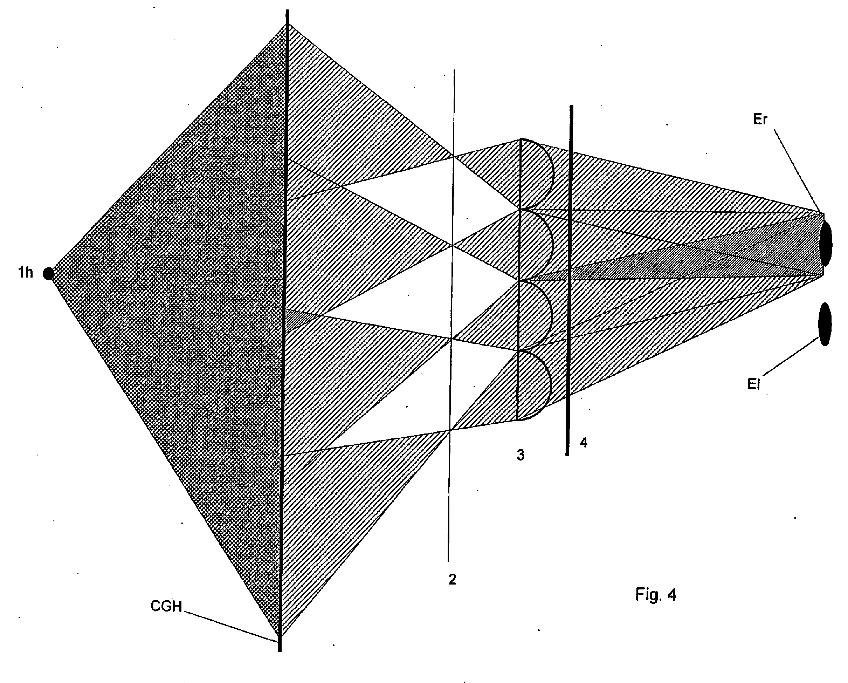

Fig. 4 zeigt eine schematische Darstellung eines Ausschnitts aus einem autostereoskopischen Multi-User-Display mit der erfindungsgemäßen steuerbaren Beleuchtungseinrichtung und den Strahlenverlauf im Display für ein rechtes Auge Er eines Betrachters, dem eine Information in der Wiedergabematrix 4 dargestellt wird. In Ebenen vor und nach dem CGH können zusätzliche optische Elemente zur Formung,

Ablenkung oder dem teilweisen Ausblenden der Lichtbündel oder des Streulichts angeordnet sein, die zur besseren Übersicht nicht eingezeichnet sind. Mit dem in Fig. 2 dargestellten Verfahren kann z.B. durch Verschieben der sekundären Lichtquellen der Matrix 2 alternativ auch das linke Auge El beleuchtet werden und sequentiell oder gleichzeitig eine Information empfangen.

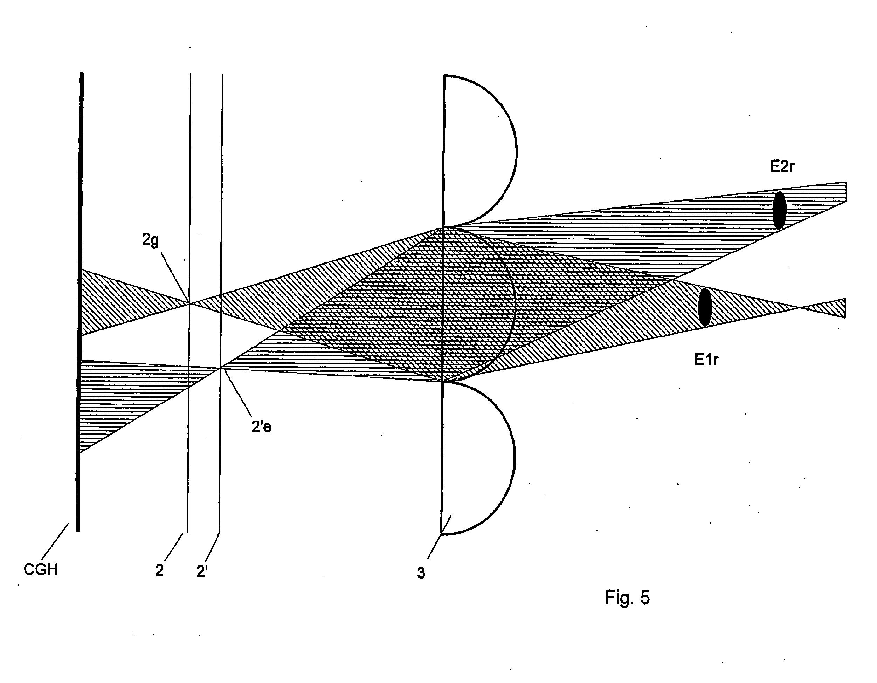

Fig. 5 zeigt in einer schematischen Darstellung einen Ausschnitt des CGH und die von diesem rekonstruierten Matrizen sekundärer Lichtquellen 2 und 2' mit den Lichtquellen 2g und 2'e. Ihnen folgen das Lentikular 3 und die rechten Augen zweier Betrachter in unterschiedlichen Betrachterebenen.

Nachfolgend wird die Wirkungsweise der steuerbaren Beleuchtungseinrichtung näher beschrieben. Da es sich in den Zeichnungen um ausschnittsweise Darstellungen handelt, sind immer nur Teilhologramme usw. zu sehen. Der Einfachheit halber wird aber in der folgenden Beschreibung immer von Hologrammen usw. ausgegangen. Eine Matrix primärer Lichtquellen 1 beleuchtet gemäß Fig. 1 ein in einem SLM dargestelltes CGH, wobei die Matrix aus Lichtquellen 11,..., 1n besteht und jede Lichtquelle aus einem oder mehreren leuchtenden Elementen realisiert wird. Diese Elemente können punkt-, linien- oder flächenförmig sein. Die Matrix primärer Lichtquellen 1 ist steuerbar, um die auf das CGH einfallende Lichtverteilung ändern zu können. Es müssen dabei nicht alle primären Lichtquelle 11, ... , 1 n aktiviert werden. Das CGH kann aber auch insgesamt von der Matrix primärer Lichtquellen 1 beleuchtet werden. Bei der Beleuchtung wird vorausgesetzt, dass das Licht der primären Lichtquellen 1 zur Rekonstruktion des CGH hinreichend räumlich und zeitlich kohärent ist.

Der SLM zur Kodierung des CGH ist in der Regel ein steuerbares diffraktives optisches Element (DOE), das transmissiv oder reflektiv ausgebildet sein kann. Es besteht vorzugsweise aus einer Matrix von Zellen, die das einfallende Licht in seiner Amplitude und/oder Phase beeinflussen. Diese können Flüssigkristall-Zellen sein, aber auch beispielsweise mikromechanisch bewegte Spiegel. Auch kontinuierliche SLM, wie Akusto-Optisch Adressierbare SLM (AOSLM), können zur Kodierung von Hologrammen eingesetzt werden. Um die komplexen Amplitudenwerte des CGH auf dem DOE darzustellen, werden allgemein bekannte Verfahren eingesetzt. Da eine möglichst hohe Helligkeit mit einem geringen Aufwand an Lichtmitteln erreicht werden soll, wird das DOE so benutzt, dass vorteilhafterweise das Licht nur oder fast nur in seiner Phase beeinflusst wird. So können vorteilhaft sogenannte Phasenhologramme dargestellt werden. Auch eine Kombination von phasen- und amplitudenmodulierenden Elementen ist möglich. Beispielsweise kann ein amplitudenmodulierendes DOE mit einer Phasenmaske kombiniert werden, die benachbarten Zellen des DOE eine unterschiedliche Phase zuweist.

Das CGH rekonstruiert aus dem von der Matrix primärer Lichtquellen 1 kommenden Licht eine Matrix sekundärer Lichtquellen 2. Diese Matrix sekundärer Lichtquellen 2 weist die gewünschte sekundäre Lichtverteilung zur Beleuchtung der transmissiven Wiedergabematrix 4 eines autostereoskopischen oder holografischen Displays auf (siehe Fig. 3). Eine sekundäre Lichtquelle besteht aus einem oder mehreren leuchtenden Elementen, die punkt-, linien- oder flächenförmig sein können. Sie werden für die Wiedergabematrix 4 geeignet gewählt. Zum Beispiel werden für ein autostereoskopisches Display, das ein Lentikular als Abbildungsmatrix verwendet, vorzugsweise Linien-Lichtquellen eingesetzt. Um eine gleichmäßige Lichtverteilung für den Betrachter zu erhalten, werden durch das CGH z.B. mehrere nebeneinander liegende parallele Linien-Lichtquellen rekonstruiert. Autostereoskopische Displays mit einer derartigen Abbildungsmatrix weisen nur eine horizontale Parallaxe auf. Dagegen ist für ein autostereoskopisches Display mit horizontaler und vertikaler Parallaxe eine Matrix punktförmig ausgebildeter sekundärer Lichtquellen nötig.

Wird das autostereoskopische Display als Multi-User-Display benutzt, werden nicht alle sekundären Lichtquellen 21,..., 2n in der gleichen Ebene rekonstruiert. Entsprechend Fig. 5 werden die beispielhaft ausgewählten sekundären Lichtquellen 2g und 2'e vom CGH in zwei verschiedenen Ebenen rekonstruiert und ihre Lichtbündel durch ein Lentikel des Lentikulars 3 gleichzeitig auf zwei Betrachteraugen E1r und E2r in verschiedenen Betrachterebenen gerichtet. Dadurch, dass die sekundären Lichtquellen 2g und 2'e in unterschiedlichen Ebenen rekonstruiert werden können, wird es möglich, die laterale Ausdehnung eines Strahlenbündels variabel zu gestalten. Die laterale Ausdehnung des Lichtbündels in der Ebene der Augen wird hierbei sowohl durch die Brennweite des Lentikulars 3 als auch durch die Abstände zwischen sekundärer Lichtquelle und Lentikular bzw. zwischen Lentikular und Augenebene bestimmt. Zum Nachführen der Lichtbündel auf einen Betrachter, der sich auf das Display zu oder davon weg bewegt, kann es daher nötig sein, die Ausdehnung der Lichtbündel in der

Ebene der Betrachteraugen anzupassen. Gibt es wie hier mehrere Betrachter in verschiedenen Abständen zur nicht dargestellten Wiedergabematrix 4, erhält man bei gleichzeitiger Rekonstruktion sekundärer Lichtquellen für jeden Betrachter somit eine dreidimensionale Matrix sekundärer Lichtquellen. Damit wird eine gesteuerte dreidimensionale Beleuchtung realisiert. Die Augen der Betrachter erhalten dabei so viel Licht wie nötig und ein Übersprechen der zugehörigen Informationen wird vermieden.

Abhängig von der Anzahl und den Positionen der Betrachter sowie den Systemparametern, wie Brennweite des verwendeten Lentikulars, Abstände zwischen den verschiedenen optischen Komponenten des Systems, wird das CGH berechnet und erzeugt in einer nachfolgenden Ebene eine Matrix sekundärer Lichtquellen 2. Zum Nachführen der Lichtbündel auf den oder die Betrachter wird ein geändertes CGH auf dem SLM dargestellt. Eine andere Möglichkeit des Nachführens kann gemäß Fig. 2 dadurch realisiert werden, dass mindestens eine primäre Lichtquelle 1 h, von der eine sekundäre Lichtquelle 2h rekonstruiert wird, in die Position 1i verschoben wird. Das heißt, es wird praktisch die Lichtquelle 1i aktiviert, durch deren Beleuchtung und Kodierung des CGHs dann die sekundäre Lichtquelle 2i rekonstruiert wird. Ebenso gut ist es auch möglich, beide genannte Maßnahmen zu kombinieren.

Der Abstand und die Form der sekundären Lichtquellen 21,..., 2n ergeben sich aus dem jeweils berechneten Hologramm und der Form der primären Lichtquellen 11,..., 1 n. Durch Neuberechnung des Hologramms lassen sich die sekundären Lichtquellen 21,..., 2n in ihrer Gesamtheit als Matrix oder einzeln verschieben sowie die Abstände zwischen den einzelnen sekundären Lichtquellen 21,..., 2n und ihre Anzahl ändern. Eine Gesamtverschiebung der Matrix sekundärer Lichtquellen 2 lässt sich auch durch eine Verschiebung der Matrix primärer Lichtquellen 1 bei gleichbleibendem CGH erreichen. Durch das Verschieben wird praktisch eine Umorientierung der Lichtbündel von einem Auge auf das andere realisiert.

Bei der Berechnung des CGH ist zu beachten, dass am Ort des linken bzw. rechten Auges des Betrachters ein ausreichend großer Bereich beleuchtet wird und dass der Betrachter die Wiedergabematrix gleichmäßig hell sieht. Daraus ergibt sich, dass die Lage und Intensitätsverteilung der sekundären Lichtquellen 21,..., 2n sowie Korrekturkompensationen, etwa für Aberrationen, in die Hologrammberechnung einfließen.

Mit einer Verschiebung der sekundären Lichtquellen in axialer Richtung ist es moglich, die Bildfeldkrümmung der Lentikel des Lentikulars 4 auszugleichen. Diese wird wirksam, wenn ein Strahlenbündel ein Lentikel bzw. eine Linse schräg zur optischen Achse durchläuft. Zur Korrektur kann die Rekonstruktion einer entsprechenden sekundären Lichtquelle in axialer Richtung verschoben werden. Dies geschieht in Abhängigkeit vom Winkel des Strahlenbündels zur optischen Achse durch eine passende Änderung des Hologramms. Außerdem kann abhängig von der Betrachterposition der Öffnungswinkel der die sekundären Lichtquellen 21,..., 2n erzeugenden Lichtbündel verändert werden.

Weitere Ausführungen der Beleuchtungseinrichtung ergeben sich dadurch, dass zusätzliche optische Elemente zum Vor- oder Nachbearbeiten der primären oder sekundären Lichtverteilung in Ebenen vor bzw. nach dem CGH angeordnet sind. Diese Elemente können refraktiv oder diffraktiv oder als Apertur wirken. Beispielsweise können zwischen der Matrix primärer Lichtquellen 1 und dem CGH Linsen angeordnet sein, um das Hologramm effizienter zu beleuchten.

In der Matrix primärer Lichtquellen 1 selbst können die Lichtquellen auch schon durch vorgefertigte DOE in eine gewünschte Form gebracht werden, beispielsweise als Linien-Lichtquellen. Zwischen dem Hologramm 2 und der Matrix sekundärer Lichtquellen 3 können auch Elemente zur Richtungsänderung der Lichtstrahlen angebracht sein, die aus divergenten Lichtbündeln kollimierte oder konvergente Lichtbündel formen.

Außerdem können zwischen dem CGH und der Matrix sekundärer Lichtquellen 2 Aperturen angebracht sein, die residuales ungebeugtes Licht oder unerwünschte höhere Beugungsordnungen ausblenden. Diese Aperturen müssen der Matrix sekundärer Lichtquellen angepasst werden, wenn sich deren Position und/oder Abstand ändert. Daher ist es vorteilhaft, konfigurierbare Aperturen beispielsweise in Form eines transmissiven LCD-Panels zu verwenden, dessen Zellen in ihrer Transmission geändert werden können. Die konfigurierbaren Aperturen können auch dazu dienen, die Ausdehnung der sekundären Lichtquellen 2 bei Bedarf einzuschränken. In einer anderen Ausführungsform der steuerbaren Beleuchtungseinrichtung kann der SLM reflektiv mit einer entsprechende Anordnung der primären Lichtquellen 1 betrieben werden.

Wird die Matrix sekundärer Lichtquellen 2 zur Beleuchtung einer holografisch kodierten Wiedergabematrix 4 in einem holografischen Display verwendet, muss aut die nötige räumliche und zeitliche Kohärenz der sekundären Lichtquellen geachtet werden.

Für die praktische Ausführung der steuerbaren Beleuchtungseinrichtung in einem autostereoskopischen oder holografischen Display ist es vorteilhaft, wenn für eine Vielzahl von Positionen der Betrachteraugen, für die eine entsprechende sekundäre Lichtverteilung zu rekonstruieren ist, die zugehörigen CGHs vorberechnet und in einer LUT gespeichert sind.

## Patentansprüche

1. Steuerbare Beleuchtungseinrichtung mit einer Beleuchtungsmatrix (1) primärer Lichtquellen (11, ..., 1n) mit mindestens einem leuchtenden Element pro Lichtquelle, mit einer Abbildungsmatrix (3), um das Licht der Lichtquellen in Bündeln auf jedes Auge (Er, El) eines Betrachters in einer Betrachterebene zu richten, und mit einer von der Abbildungsmatrix (3) ausleuchtbaren Wiedergabematrix (4), **gekennzeichnet durch** einen zwischen der Beleuchtungsmatrix (1) und der Abbildungsmatrix (3) angeordneten steuerbaren Lichtmodulator (SLM), auf dem ein von den primären Lichtquellen (11, ... , 1 n) beleuchtbares computergeneriertes Hologramm (CGH) derart kodierbar ist, dass mittels Kodierung mit variablen Parametern eine in Abhängigkeit von der Position der Betrachteraugen konfigurierbare Beleuchtung realisierbar ist, und dass in mindestens einer dem steuerbaren Lichtmodulator (SLM) nachfolgenden Ebene eine Matrix sekundärer Lichtquellen (21, ..., 2n) mit einer sekundären Lichtverteilung vom computergenerierten Hologramm (CGH) rekonstruierbar ist.

2. Steuerbare Beleuchtungseinrichtung nach Anspruch 1, wobei die Wiedergabematrix (4) ein stereoskopisches oder holografisches Display ist.

3. Steuerbare Beleuchtungseinrichtung nach Anspruch 1, bei welcher im Lichtmodulator (SLM) ein computergeneriertes Hologramm (CGH) kodiert ist, das in mindestens einer nachfolgenden Ebene eine Matrix sekundärer Lichtquellen (21, ..., 2n) mit einer sekundären Lichtverteilung rekonstruiert, wobei eine primäre Lichtverteilung der primären Lichtquellen (11, ... , 1 n) in eine von der Betrachterposition abhängige sekundäre Lichtverteilung umgeformt wird.

4. Steuerbare Beleuchtungseinrichtung nach Anspruch 1, bei der das computergenerierte Hologramm (CGH) gleichzeitig in verschiedenen Ebenen die Matrix sekundärer Lichtquellen (21, ..., 2n) rekonstruiert.

5. Steuerbare Beleuchtungseinrichtung nach Anspruch 1, bei der zum Nachführen der Lichtbündel auf den Betrachter ein geändertes computergeneriertes Hologramm (CGH) dargestellt und/oder mindestens eine primäre Lichtquelle verschoben wird.

6. Steuerbare Beleuchtungseinrichtung nach Anspruch 1, bei der die sekundären Lichtquellen (21,..., 2n) eine Matrix aus wahlweise punkt-, linien- oder flächenförmig ausgebildeten Lichtelementen mit sekundärer Lichtverteilung bilden.

7. Steuerbare Beleuchtungseinrichtung nach Anspruch 1, wobei eine Änderung der sekundären Lichtverteilung durch eine Änderung der primären Lichtquellen (11, ... , 1 n), und/oder eine Änderung der Kodierung des computergenerierten Hologramms (CGH) erfolgt.

8. Steuerbare Beleuchtungseinrichtung nach Anspruch 1, bei der die sekundäre Lichtverteilung sowohl bezüglich der Anzahl der sekundären Lichtquellen (21, ... , 2n) als auch bezüglich der Abstände der Lichtquellen zueinander veränderbar ist.

9. Steuerbare Beleuchtungseinrichtung nach Anspruch 1, bei der die sekundären Lichtquellen (21, ..., 2n) nicht nur lateral, sondern auch in axialer Richtung verschiebbar sind.

10. Steuerbare Beleuchtungseinrichtung nach Anspruch 1, bei der der steuerbare Lichtmodulator (SLM) zum Kodieren des CGH transmissiv oder reflektiv ausgebildet ist.

11. Steuerbare Beleuchtungseinrichtung nach Anspruch 1, bei der dem steuerbaren Lichtmodulator (SLM) optische Elemente zum Formen, Umlenken oder Ausblenden von Lichtbündeln vor- oder nachgeordnet sind.

12. Steuerbare Beleuchtungseinrichtung nach Anspruch 1, bei der dem steuerbaren Lichtmodulator (SLM) mit dem kodierten CGH ein weiterer, transmissiver steuerbarer Lichtmodulator mit veränderbaren Öffnungen zum Ausblenden von Streulicht und Licht höherer Beugungsordnungen sowie zum Einschränken der Ausdehnung der sekundären Lichtquellen nachgeordnet ist.

13. Steuerbare Beleuchtungseinrichtung nach Anspruch 1, bei der die Abbildungsmatrix (3) ein Lentikular mit parallel angeordneten Lentikeln enthält.

14. Steuerbare Beleuchtungseinrichtung nach Anspruch 1, bei der die einer Vielzahl von Positionen der Betrachteraugen entsprechenden sekundären Lichtverteilungen und die zugehörigen computergenerierten Hologramme (CGH) vorberechnet in einer Look-up-table (LUT) gespeichert sind.

15. Steuerbare Beleuchtungseinrichtung nach Anspruch 2 mit einem holografischen Display als Wiedergabematrix (4), wobei die primären und sekundären Lichtquellen zur Rekonstruktion des Hologramms der Wiedergabematrix (4) hinreichend räumlich und zeitlich kohärent sind.

16. Steuerbare Beleuchtungseinrichtung nach Anspruch 15, bei welcher der steuerbare Lichtmodulator (SLM) eine Matrix von phasen-, amplituden- oder phasen- und amplitudenmodulierenden Zellen ist.

## Claims

1. Controllable illumination device with an illumination matrix (1) of primary light sources (11, ..., 1n) with at least one light-emitting element per light source, with an imaging matrix (3) for directing the light which is emitted by the light sources in pencils of rays onto each eye (Eᵣ, Eₗ) of an observer in an observer plane, and with a display matrix (4) which is illuminatable by the imaging matrix (3), **characterised by** a controllable light modulator (SLM), which is disposed between the illumination matrix (1) and the imaging matrix (3), on which a computer-generated hologram (CGH), which is illuminatable by the primary light sources (11, ..., 1n), is encodable such that a configurable illumination is realisable depending on the position of the observer eyes by way of encoding with variable parameters, and that in at least one plane which follows the controllable light modulator (SLM) a matrix of secondary light sources (21, ..., 2n) with a secondary light distribution can be reconstructed by the computer-generated hologram (CGH).

2. Controllable illumination device according to claim 1, wherein the display matrix (4) is a stereoscopic or holographic display.

3. Controllable illumination device according to claim 1, where a computer-generated hologram (CGH) which reconstructs a matrix of secondary light sources (21, ..., 2n) with a secondary light distribution in at least one subsequent plane is encoded on the light modulator (SLM), wherein a primary light distribution of primary light sources (11, ..., 1 n) is transformed into a secondary light distribution, which is dependent on the observer position.

4. Controllable illumination device according to claim 1, wherein the computer-generated hologram (CGH) simultaneously reconstructs the matrix of secondary light sources (21, ..., 2n) into several planes.

5. Controllable illumination device according to claim 1, wherein a modified computer-generated hologram (CGH) is constituted and/or at least one primary light source is displaced for tracking the pencils of rays to the observer.

6. Controllable illumination device according to claim 1, wherein the secondary light sources (21, ..., 2n) form a matrix which alternatively comprises point light elements, line light elements or plane light elements and which provides a secondary light distribution.

7. Controllable illumination device according to claim 1, wherein the secondary light distribution is modified by changing the primary light sources (11, ..., 1 n) and/ or by changing the encoding of the computer-generated hologram (CGH).

8. Controllable illumination device according to claim 1, wherein the secondary light distribution is alterable as regards both the number of secondary light sources (21, ... , 2n) and the distances between the individual light sources.

9. Controllable illumination device according to claim 1, wherein the secondary light sources (21, ..., 2n) are movable not only laterally, but also in axial direction.

10. Controllable illumination device according to claim 1, wherein the controllable light modulator (SLM) for encoding the computer-generated hologram (CGH) is designed in a transmissive or reflective manner.

11. Controllable illumination device according to claim 1, wherein the controllable light modulator (SLM) is preceded or followed by further optical elements for shaping, deflecting or eliminating pencils of rays.

12. Controllable illumination device according to claim 1, wherein the controllable light modulator (SLM) with encoded CGH is followed by another, transmissive controllable light modulator with alterable apertures to eliminate diffused light and light of higher diffraction orders and to limit the size of the secondary light sources.

13. Controllable illumination device according to claim 1, wherein the imaging matrix (3) comprises a lenticular with parallel arranged lenticules.

14. Controllable illumination device according to claim 1, wherein the secondary light distributions, which correspond to a multitude of observer eye positions, and the related computer-generated holograms (CGH) are pre-computed and stored in a look-up table (LUT).

15. Controllable illumination device according to claim 2 with a display matrix (4) in the form of a holographic display, wherein the primary and secondary light sources which are used to reconstruct the hologram on the display matrix (4) comprise sufficient spatial and temporal coherence.

16. Controllable illumination device according to claim 15, wherein the controllable light modulator (SLM) is a matrix of cells which modulate the phase, amplitude or both phase and amplitude of light.

## Revendications

1. Dispositif d'éclairage réglable avec une matrice d'éclairage (1) de sources de lumière primaires (11, ..., 1n) avec au moins un élément lumineux par source de lumière, une matrice d'imagerie optique (3) pour diriger la lumière des sources de lumière en faisceaux vers chaque oeil (Eᵣ, Eₗ) d'un observateur dans un plan d'observateur, et une matrice de reproduction (4), pouvant être éclairée par la matrice d'imagerie optique (3), **caractérisé par**
un modulateur de lumière (SLM) réglable, disposé entre la matrice d'éclairage (1) et la matrice d'imagerie optique (3), sur lequel un hologramme généré par ordinateur (CGH) pouvant être éclairé par les sources de lumière primaires (11, ..., 1ln) est encodable de sorte que, au moyen du codage avec des paramètres variables, un éclairage configurable en fonction de la position des yeux de l'observateur est réalisable, et en ce que dans au moins un plan suivant le modulateur de lumière (SLM) réglable, une matrice de sources de lumière secondaires (21, ..., 2n) avec une répartition de lumière secondaire peut être reconstituée par l'hologramme généré par ordinateur (CGH).

2. Dispositif d'éclairage réglable selon la revendication 1, dans lequel la matrice de reproduction (4) est un affichage stéréoscopique ou holographique.

3. Dispositif d'éclairage réglable selon la revendication 1, dans lequel, dans le modulateur de lumière (SLM), un hologramme généré par ordinateur (CGH) est encodé, qui reconstitue dans au moins un plan suivant une matrice de sources de lumière secondaires (21, ..., 2n) avec une répartition de lumière secondaire, une répartition de lumière primaire des sources de lumière primaires (11, ..., 1n) étant transformée en une répartition de lumière secondaire dépendant de la position de l'observateur.

4. Dispositif d'éclairage réglable selon la revendication 1, dans lequel l'hologramme généré par ordinateur (CGH) reconstitue simultanément dans différents plans la matrice de sources de lumière secondaires (21, ..., 2n).

5. Dispositif d'éclairage réglable selon la revendication 1, dans lequel, pour le maintien du guidage des faisceaux lumineux sur l'observateur, un hologramme généré par ordinateur (CGH) modifié est représenté, et/ou au moins une source de lumière primaire est déplacée.

6. Dispositif d'éclairage réglable selon la revendication 1, dans lequel les sources de lumière secondaires (21, ..., 2n) forment une matrice d'éléments lumineux, avec répartition de lumière secondaire, constitués au choix de façon ponctuelle, linéaire ou étendue en surface.

7. Dispositif d'éclairage réglable selon la revendication 1, dans lequel une modification de la répartition de lumière secondaire est effectuée par une modification des sources de lumière primaires (11, ..., 1n) et/ou par une modification du codage de l'hologramme généré par ordinateur (CGH).

8. Dispositif d'éclairage réglable selon la revendication 1, dans lequel la répartition de lumière secondaire est modifiable aussi bien en ce qui concerne le nombre de sources de lumière secondaires (21, ..., 2n) qu'en ce qui concerne les intervalles séparant les sources de lumière les unes des autres.

9. Dispositif d'éclairage réglable selon la revendication 1, dans lequel les sources de lumière secondaires (21, ..., 2n) sont déplaçables non seulement latéralement, mais également dans la direction axiale.

10. Dispositif d'éclairage réglable selon la revendication 1, dans lequel le modulateur de lumière (SLM) réglable pour le codage du CGH est constitué de façon transmissive ou réflective.

11. Dispositif d'éclairage réglable selon la revendication 1, dans lequel des éléments optiques de formation, de déviation ou d'occultation de faisceaux lumineux sont placés en amont ou en aval du modulateur de lumière (SLM) réglable.

12. Dispositif d'éclairage réglable selon la revendication 1, dans lequel un autre modulateur de lumière réglable transmissif avec des ouvertures modifiables pour l'occultation de la lumière diffusée et de la lumière ayant des ordres de diffraction plus élevés, ainsi que pour la limitation de l'extension des sources de lumière secondaires est placé en aval du modulateur de lumière (SLM) réglable avec le CGH encodé.

13. Dispositif d'éclairage réglable selon la revendication 1, dans lequel la matrice d'imagerie optique (3) contient un lenticulaire avec des lenticules disposées en parallèle.

14. Dispositif d'éclairage réglable selon la revendication 1, dans lequel les répartitions de lumière secondaires correspondant à une multiplicité de positions des yeux de l'observateur et les hologrammes générés par ordinateur (CGH) correspondants sont enregistrés, pré-calculés, dans une table de conversion (LUT).

15. Dispositif d'éclairage réglable selon la revendication 2 avec un affichage holographique en tant que matrice de reproduction (4), dans lequel les sources de lumière primaires et secondaires pour la reconstitution de l'hologramme de la matrice de reproduction (4) sont suffisamment cohérentes dans l'espace et dans le temps.

16. Dispositif d'éclairage réglable selon la revendication 15, dans lequel le modulateur de lumière (SLM) réglable est une matrice de cellules à modulation de phases, d'amplitudes, ou de phases et d'amplitudes.
